# EUROPEAN PATENT APPLICATION

(11) **EP 2 075 565 A1**
(43) Date of publication of application: **01.07.2009**
(21) Application number: 08169928.2
(22) Date of filing: 25.11.2008
(51) Int. Cl.: G01M 3/00

(54) **Oxygen infusion control for coffee container**

(30) Priority: 27.12.2007 US 965111
(71) Applicant: Kraft Foods Global Brands LLC, Northfield, Illinois 60093 (US)
(72) Inventor: Scarola, Leonard S., Basking Ridge New Jersey 07920 (US)
(74) Representative: Smaggasgale, Gillian Helen

(57) **Abstract**

A method for designing or producing a coffee container system includes the step of constructing a sample of a coffee container system, where the container system includes a main container, a lift-off top, and a seal mechanism for the opening between the lift-off top and the container. Thereafter, oxygen ingress into the container system is measured when the lift-off top is in place and the seal mechanism is in operation. A sealing effectiveness of the seal mechanism is then modified to achieve a desired oxygen ingress for the container system, so that container systems housing coffee and having the modified seal mechanism providing the desired oxygen ingress can be manufactured. In addition, a method for retarding oxygen ingress into coffee contained in a container system is provided by infusing the coffee with a high molecular weight gas compatible with the coffee during manufacture of the finished coffee container system.

## Description

### BACKGROUND OF THE INVENTION

Coffee containers or the like typically are provided with a sealing (typically foil) membrane over the access opening to prevent the ingress of any oxygen from atmosphere into the coffee prior to opening of the access opening by the consumer. The sealing membrane is used because any oxygen present in the coffee container will adversely affect the coffee flavor. However, after a consumer removes the sealing membrane from the coffee container and exposes the coffee to atmosphere through the access opening during the initial use, the amount of oxygen available to create off flavors in the coffee remaining in the container increases dramatically, and unavoidably. In addition, while coffee containers typically have an overcap to cover the access opening of the container after removal of the sealing membrane, such overcaps are usually not intended to provide an air-tight seal since it was generally thought that the coffee has already been fully exposed to atmosphere and nothing further can be done to stop oxidation of the coffee from occurring.

### BRIEF SUMMARY OF THE INVENTION

In accordance with the present invention, a method for designing a coffee container system is provided which includes the steps of constructing a sample of a coffee container system, where the container system includes a main container having an opening, a lift-off top for closing the opening, and a seal mechanism for the opening between the lift-off top and the container. Thereafter, oxygen ingress into the container system is measured when the lift-off top is in place on the container and the seal mechanism is in operation. A sealing effectiveness of the seal mechanism is then modified to achieve a desired oxygen ingress for the container system, so that container systems housing coffee and having the modified seal mechanism providing the desired oxygen ingress can be manufactured.

In accordance with this method, the constructing step includes the step of locating a seal of the seal mechanism on the lift-off top. In the measuring step includes the steps of filling the constructed sample container with N2 with or without coffee, until the oxygen content is less than a predetermined low value, preferably about 12%; the lift-off top in place on the container; and after the sealing step, recording the 02 content as a function of time until the 02 content increases from the predetermined low value to a predetermined greater value, preferably about 12% to about 18%.

Preferably, this method also includes the step of measuring oxygen ingress into the container of a manufactured container system with the modified seal mechanism to test the sealing effectiveness of the modified seal mechanism. Thereafter, the sealing effectiveness of the modified seal mechanism is modified based on the measured oxygen ingress of the manufactured container system, and additional containers with the further modified seal mechanism are manufactured.

In a preferred embodiment, the manufacturing step also includes the step of infusing a high molecular weight gas into the container containing or intended to contain the coffee. The high molecular weight gas has a molecular weight at least twice that of 02; and is preferably selected from the group consisting of pyridine, methyl pyrazine, furfural, furfuryl thiol, and stearyl alcohol.

Also in accordance with the present invention, a method for producing coffee container systems with increased pantry life is provided. In this method, an oxygen ingress effectiveness of a test coffee container system having a lift-off cap for a main container is tested to determine if the oxygen effectiveness factor is below a predetermined value. If the oxygen ingress effectiveness of the test coffee container system is below the predetermined value, a sealing mechanism of a subsequent coffee container system is altered to affect the oxygen ingress effectiveness of the subsequent coffee container system. Then, an oxygen ingress effectiveness of the subsequent coffee container system with the altered sealing mechanism is tested to determine if the oxygen effectiveness factor of the subsequent coffee container system is still below the predetermined value. These altering and following testing steps are then iteratively repeated until an oxygen ingress effectiveness of a subsequent coffee container system is above the predetermined value. Finally, a plurality of the coffee container systems with an oxygen ingress effectiveness above the predetermined value is produced.

Like the first-mentioned method for designing a coffee container system, this method for producing coffee container systems with increased pantry life preferably has a seal of the seal mechanism located on the lift-off cap which is altered. Similarly, the testing steps include the steps of filling the container with N2 with or without the coffee then present, until the oxygen content is less than a predetermined low value, preferably about 12%; applying the lift-off cap in place on the container; and after the applying step, recording the 02 content as a function of time until the 02 content increases from about the predetermined low value (preferably 12%) to a predetermined greater value, preferably about 18%. Also, the producing step also includes the step of infusing a high molecular weight gas into the container containing or intended to contain the coffee, where the high molecular weight gas has a molecular weight at least twice that of 02 and where the high molecular weight gas is selected from the group consisting of pyridine, methyl pyrazine, furfural, furfuryl thiol, and stearyl alcohol.

Further in accordance with the present invention, a method for retarding oxygen ingress into coffee contained in a container system is provided. In this method, the container containing or intended to contain the coffee is infused with a high molecular weight gas compatible with the coffee during manufacture of the finished coffee container system. Then, the finished coffee container system is provided with a relatively air-tight overcap sealing mechanism to substantially retard oxygen ingress into a headspace of the coffee container system when an overcap is in place on the coffee container system. Preferably, the high molecular weight gas has a molecular weight at least twice that of O2, conveniently selected from the group consisting of pyridine, methyl pyrazine, furfural, furfuryl thiol, and stearyl alcohol.

It is a feature of the present invention that a coffee container system is provided which is designed to reduce 02 ingress and to increase pantry life of the contained coffee.

It is also a feature of the present invention that oxygen ingress is directly retarded.

Other features and advantages of the present invention are stated in or apparent from detailed descriptions of presently preferred embodiments of the invention found hereinbelow.

### BRIEF DESCRIPTION OF THE SEVERAL VIEWS OF THE DRAWINGS

Figure 1 is a schematic cross sectional elevation view of an upper portion of a coffee container including an overcap.

Figure 2 is a graph showing the oxidation rate of coffee as a function of the oxygen content of its atmosphere.

Figure 3 is a graph showing the time required for oxygen to diffuse to the bottom of two different containers of coffee.

Figure 4 is a graph showing oxygen content in the headspace of an opened and then re-sealed container as a function of time.

Figure 5 is a graph showing oxygen ingress in a sample container/overcap combination as a function of time.

### DETAILED DESCRIPTION OF THE INVENTION

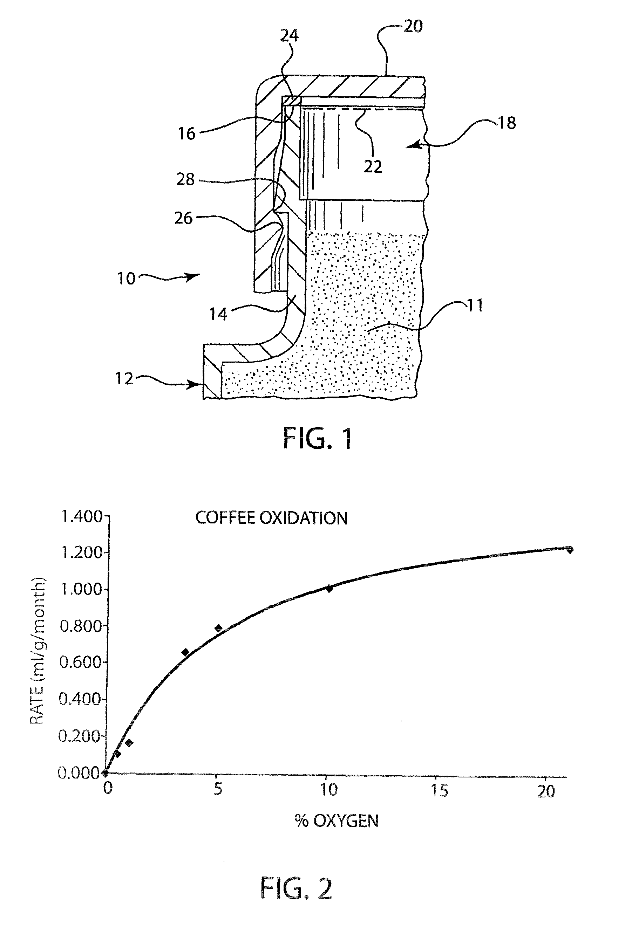

With reference now to the drawings in which like numerals represent like elements, depicted in figure 1 is an exemplary portion of a plastic coffee container system 10 in which coffee 11 (in any of various forms, such as beans or grounds) is contained in a main body or container 12. Container 12 includes a neck 14 having an upper horizontal edge 16 which defines an opening 18 of the container 12. Attached about a portion of neck 14 is a lift-off or snap-on plastic overcap 20. Beneath overcap 20 there is schematically shown a peelable foil barrier layer 22 which is typically provided to seal opening 18 in an airtight manner after filling of container 12 by the manufacturer. Foil layer 22 is typically adhesively attached to upper edge 16 at manufacture; and then peeled from container 12, after lifting off of overcap 20, by the consumer the first time that the consumer desires to remove coffee 12 from opening 18 of container 12. Thereafter, overcap 20 is replaced over opening 18 to provide a (relatively air-tight) seal for opening 18.

In accordance with the present invention, a compression gasket or seal 24 is provided between overcap 20 and upper edge 16 of container 12. In this preferred embodiment, seal 24 is a simple elastic member or the like attached (and sealed) around the inside perimeter of overcap 20 by a suitable adhesive (not shown) or the like. Then, when overcap 20 is in place on container 12, seal 24 seals against upper edge 16. It will be appreciated that overcap 20 has an internally directed rib 26 which is located below an externally directed rib 28 of container neck 14. The interaction of ribs 26 and 28 hold overcap 20 in place on neck 14, with some downwardly directed (compressive) force on overcap 20 so that seal 24 positively engages rim 16 to effect a relatively air-tight sealing mechanism for opening 18 and thus to substantially retard the ingress of oxygen. Of course, other seal mechanisms to effect a relatively air-tight seal between the overcap and container are possible and known in the art, including seal mechanisms using more than one ring or line of contact to effect a double seal.

In order to appreciate the present invention, it will initially be appreciated that the time required to fully oxidize coffee in a coffee container system 10 after removal of the foil layer, and hence the time it takes to create the most off (or undesired) flavors during pantry life, can be increased by the effectiveness of the overcap to container sealing mechanism (and the handling of the container by the consumer, over which the manufacturer has little control). As shown in figure 2, the oxidation rate of coffee in a container system is proportional to the oxygen content of the container atmosphere (or headspace). Thus, minimizing of the oxygen content in the coffee container system will decrease oxidation and increase a useful (before off flavors are too prevalent) pantry life of the coffee container system.

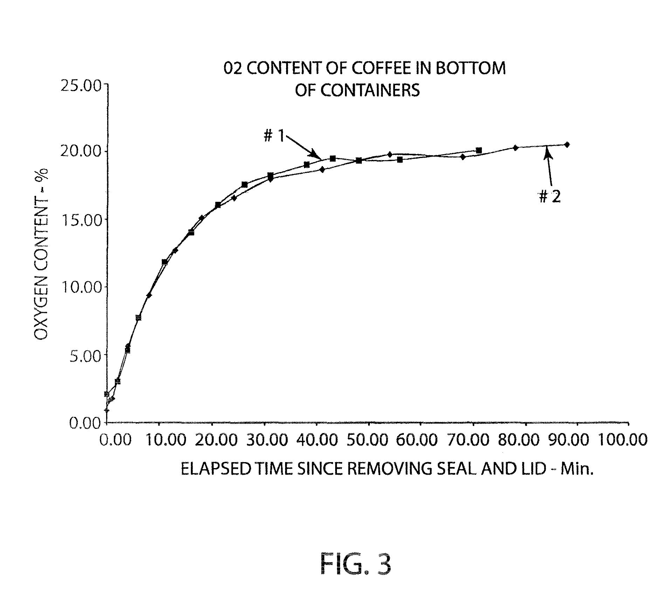

In addition, as noted above, the conventional wisdom of those of ordinary skill was that once a coffee container system was opened, the coffee remaining therein was immediately exposed to atmospheric oxygen (21%) and nothing could be done about this exposure or the subsequent oxidation of the coffee which had begun. However, studies now conducted have shown this to be a false assumption. Two factors were found to.help reduce the oxygen level to less than atmospheric in the coffee container system once the overcap was put back on an opened container. The first factor is that the remaining coffee in the container system (as the coffee container is generally opened only to remove some small portion of total coffee therein) will absorb some of the oxygen and thus reduce the oxygen percent of the atmosphere remaining in the headspace of the container system. The second factor is that oxygen takes a significant amount of time to diffuse through the remaining coffee in the container, and thus to react with the coffee located at the bottom of the container. The graph of figure 3 shows the time required for oxygen to diffuse to the bottom of two different opened three pound coffee containers.

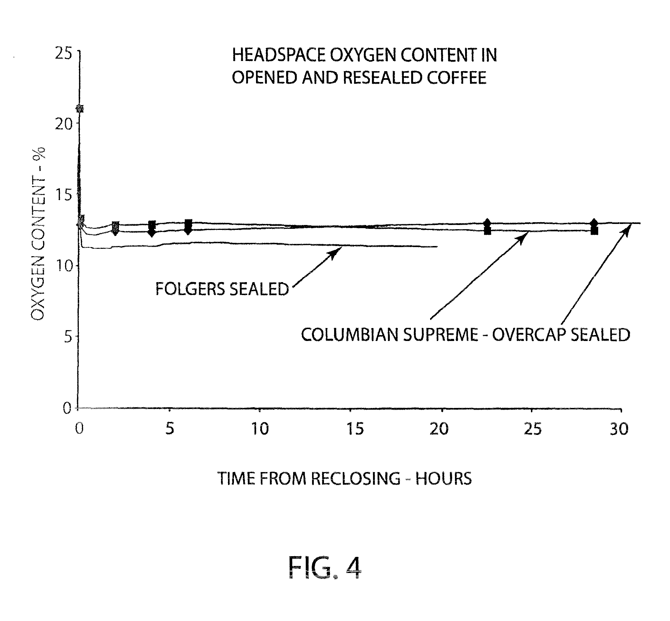

The test results shown in figure 3 were performed by drilling a hole about 1" from the bottom of each unopened coffee container, and placing an oxygen sensor in the hole which was then quickly resealed. The overcap and membrane were then removed and the surface of the coffee exposed to the environment. The data showed that it takes about 40 minutes for the oxygen to fully diffuse to the coffee in the bottom for each of the two different containers. Thus, contrary to conventional wisdom, if a consumer replaces the overcap quickly, e.g., within a few minutes of removing it, the average oxygen content in the container headspace after replacement will be less than atmospheric. To confirm this, tests were used which reproduced the action of a consumer making a pot of coffee. The test procedure was to open and unseal a container, in this test two different brands of 3 1b. coffee containers, remove 6 scoops of the coffee, and then to replace the overcap. However, in this test, the container system was further hermetically seal to prevent further ingress of oxygen past the prior art (not effectively sealed) overcap from affecting the results. The measurements taken showed that the oxygen content in the headspace of such a container system was a function of time. The results of this test are shown in figure 4.

As shown in figure 4, after the overcap is sealed, there is a rapid drop to about 12 % oxygen as the oxygen content in the grounds and headspace reach equilibrium. The O2 content theoretically should then slowly (over succeeding days) decrease due to oxidation of the coffee (removing O2 from the headspace). However, this is a slower process than could be measured accurately in this test. When the test was repeated by removing an additional 6 scoops of coffee and then hermetically resealing the coffee container system, the equilibrium content of the container headspace increased to 17% O2. This was due to the higher amount of the oxygen in the grounds and the increased headspace for new atmospheric (21%) air. It is clearly expected that the equilibrium amount of O2 will thus continue to increase in the coffee container system, as additional cycles of removing scoops are performed during normal use (pantry life).

In practice and in the prior art, overcaps are provided for coffee containers which are merely replaced on the container to cover the opening and prevent spillage. No effort was made to provide an effective airtight seal with the overcap, with the result that oxygen entered into the container headspace between the overcap and container top edges or surfaces (typically a rim) of the coffee container system. However, from the above, it is shown that a better fit or seal between the container and the overcap will result in less oxygen ingress and less oxidation. Thus, the designing of a coffee container system with a lift-off lid or the like in accordance with the present invention includes a constructing and subsequent testing of the seal of a container system to measure oxygen ingress past the seal, and then the modifying, iteratively as/if necessary, of the seal mechanism to achieve a desired oxygen ingress in the subsequently manufactured container systems. When this is done, such container systems will have significantly less oxygen ingress than prior art container systems in general, and oxidation as function oftime will be less and the flavor of the coffee will be improved over the pantry life (increased effective pantry life). It will be appreciated that in many cases an iterative process will be typical, since the results of changes will not be sufficiently predictable.

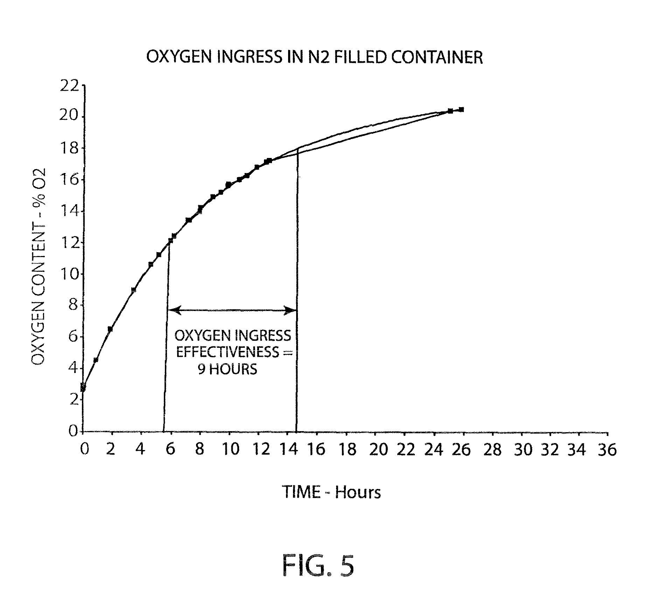

A suitable test that has been developed to measure the oxygen ingress of container system is the following. Prior to actual testing, an oxygen sensor is placed through the overcap, and the entrance hole in the overcap is sealed so that the cap is ready for use with the test container. Nitrogen is then flowed into an empty sample container, until the oxygen content is less than a predetermined low value, preferably about 12%. The prepared test overcap is then placed on the container, and oxygen content of the container system is recorded as a function of time. From the curve generated, one can then determine the amount of time required for the O2 content to increase from the predetermined value, preferably about 12%, to a predetermined greater value, preferably about 18%. This time will thus be a measure of the effectiveness of the seal. The beginning preferable value, 12%, is selected because it approximates the equilibrium level after the initial opening of the container system by the consumer; while the upper value, 18%, is selected because the curve is exponential and numbers too close to (atmospheric) 21% would have a great deal of variability associated with them and 18% is far enough below 21% to evidence a difference in oxidation levels; however, other values as determined appropriate could be used. A typical graph is for such a test using a 3 1b container system of Colombian Supreme is shown in figure 5. As shown, in this test case, the Oxygen Ingress Effectiveness is (OIE) is about 9 hours.

This same test was also run on multiple 3 1b can container systems, on multiple 3 1b plastic container systems, and on multiple sample container systems under development and designed for better sealing. The results obtained were: the can container systems had an average OIE of about 11.8 hours; the plastic container system had an average OIE of about 13.3 hours; and the sample container systems (designed for better sealing) had an average OIE of about 27.2 hours. Thus, design of the seal for the sample container system was shown to significantly effect OIE; and this is enough to make a difference in oxidation and hence in effective pantry life.

Obviously, while sample container systems may be tested, actual commercial container systems will need to be tested as well to know for certain how the commercial container systems perform. It is important to mention that the seal for commercial plastic container systems should only be tested after the initially provided sealing (foil) membrane has been sealed to the container, and then removed. Experience shows that the foil sealing/removing process affects the condition of the container finish (or upper edge to which the foil membrane is attached and removed), which in turn affects the overcap/container fit and seal mechanism so that the OIE is thus affected.

The oxidation of coffee 12 in container system 10 can also be retarded by the addition or infusion of a high molecular weight (HMW) gas or the like into the container containing or intended to contain the coffee 11, typically prior to application of the foil membrane by the manufacturer. With such a HMW gas present, even after opening of container 12 foil layer 22, the HMW tends to stay in place in the remaining coffee 11 so that the 02 from the atmosphere of the container has a harder time diffusing into the remaining coffee and oxidizing it. A desirable HMW gas would be one with a weight that is two to three times that of 02 (MW=16), and which is obviously compatible or even beneficial to coffee 11. Examples of desirable HMW gases, which are also desirable odorants, are: pyridine (MW=79), methyl pyrazine (MW=94), furfural (MW=96), furfuryl thiol (MW=114), and stearyl alcohol (MW=270). It is also believed that the HMW gas will additionally improve the aroma of the coffee which it comes in contact with; particularly where the HMW gases are collected from a coffee preparation (roasting and/or grinding) process as known in the an.

While the present invention has been described with respect to exemplary embodiments thereof, it will be understood by those of ordinary skill in the art that variations and modifications can be effected within the scope and spirit of the invention.

## Claims

1. A method for designing a coffee container system comprising the steps of:
constructing a sample of a coffee container system which includes a main container having an opening, a lift-off top for closing the opening, and a seal mechanism for the opening between the lift-off top and the container;
measuring oxygen ingress into the container system when the lift-off top is in place on the container and the seal mechanism is in operation;
modifying a sealing effectiveness of the seal mechanism to achieve a desired oxygen ingress for the container system; and
manufacturing container systems housing coffee and having the modified seal mechanism providing the desired oxygen ingress.

2. A method for designing a container system as claimed inClaim 1,therein the constructing step includes the step of locating a seal of the seal mechanism on the lift-off top.

3. A method for designing a container as claimed in Claim 1 or Claim 2, wherein said measuring step includes the steps of:
filling the constructed sample container with N2, until the oxygen content is less than a predetermined low value;
sealing the lift-off top in place on the container; and
after the sealing step, recording the 02 content as a function of time until the O2 content increases from the predetermined low value to a predetermined greater value.

4. A method for designing a container system as claimed in Claim 3, wherein the predetermined low value is about 12% and the predetermined greater value is about 18%.

5. A method for designing a container system as claimed in any one of Claims 1 to 4, further including the step of measuring oxygen ingress into the container of a manufactured container system with the modified seal mechanism to test the sealing effectiveness of the modified seal mechanism.

6. A method for designing a container system as claimed in claim 5, further including the steps of:
further modifying the sealing effectiveness of the modified seal mechanism based on the measured oxygen ingress of the manufactured container system, and
manufacturing additional containers with the further modified seal mechanism.

7. A method for designing a container system as claimed in any one of Claims 1 to 6, wherein the manufacturing step also includes the step of infusing a high molecular weight gas into the container containing or intended to contain the coffee.

8. A method for producing coffee container systems with increased pantry life comprising the steps of:
testing an oxygen ingress effectiveness of a test coffee container system having a lift-off cap for a main container to determine if the oxygen effectiveness factor is below a predetermined value;
if the oxygen ingress effectiveness of the test coffee container system is below the predetermined value, altering a sealing mechanism of a subsequent coffee container system to affect the oxygen ingress effectiveness of the subsequent coffee container system;
testing an oxygen ingress effectiveness of the subsequent coffee container system with the altered sealing mechanism to determine if the oxygen effectiveness factor of the subsequent coffee container system is still below the predetermined value;
iteratively repeating the altering and following testing steps until an oxygen ingress effectiveness of a subsequent coffee container system is above the predetermined values; and
producing a plurality of the coffee container systems with an oxygen ingress effectiveness above the predetermined value.

9. A method for producing coffee container systems as claimed in Claim 8, wherein the altering step alters a seal of the seal mechanism located on the lift-off cap.

10. A method for producing coffee container systems as claimed in Claim 8 or 9, wherein said testing steps include the steps of:
filling the container with N2, until the oxygen content is less than a predetermined low value;
applying the lift-off cap in place on the container; and
after the applying step, recording the O2 content as a function of time until the O2 content increases from the predetermined low value to a predetermined greater value.

11. A method for producing coffee container systems as claimed in Claim 10 wherein the predetermined low value is about 12% and the predetermined grater value is about 18%.

12. A method for producing coffee container systems as claimed in Claim 10 or 11, wherein the producing step also includes the step of infusing a high molecular weight gas into the container containing or intended to contain the coffee.

13. A method for retarding oxygen ingress into coffee contained in a container system comprising the step of
infusing the container containing or intended to contain the coffee with a high molecular weight gas compatible with the coffee during manufacture of the finished coffee container system; and
providing the finished coffee container system with a relatively air-tight overcap sealing mechanism to substantially retard oxygen ingress into a headspace of the coffee container system when an overcap is in place on the coffee container system.

14. A method as claimed in Claim 7, 12 or 13, wherein the high molecular weight gas has a molecular weight at least twice that of O2.

15. A method as claimed in Claim 14, wherein the high molecular
weight gas is selected from the group consisting of pyridine, methyl pyrazine, furfural, furfuryl thiol, and stearyl alcohol.

16. A method for designing a container system as claimed in Claim 13,wherein the high molecular weight gas is chosen so as to improve the aroma of the contained coffee.

17. A method for designing a container system as claimed in Claim 16,wherein the high molecular weight gas is collected from a coffee preparation process.

18. A method for producing coffee container systems with increased pantry life comprising the steps of:
testing an oxygen ingress effectiveness of a test coffee container system having a lift-off cap for a main container to determine if the oxygen effectiveness factor is below 20 hours;
if the oxygen ingress effectiveness of the test coffee container system is below the predetermined value, altering at least one sealing mechanism of a subsequent coffee container system having two discrete sealing mechanisms to affect the oxygen ingress effectiveness of the subsequent coffee container system;
testing arr oxygen ingress effectiveness of the subsequent coffee container system with the altered sealing mechanism to determine if the oxygen effectiveness factor of the subsequent coffee container system is still below 20 hours;
iteratively repeating the altering and following testing steps until an oxygen ingress effectiveness of a subsequent coffee container system is above 20 hours; and
producing a plurality of the coffee container systems with an oxygen ingress effectiveness above 20 hours.

19. A method for producing coffee container systems as claimed in Claim 18, wherein one of sealing mechanisms which can be altered is an elastic seal located on the lift-off cap.
